# EUROPÄISCHE PATENTANMELDUNG

(11) **EP 0 647 053 A1**
(43) Veröffentlichungstag der Anmeldung: **05.04.1995**
(21) Anmeldenummer: 94114831.4
(22) Anmeldetag: 20.09.1994
(51) Int. Cl.: H04M 11/06

(54) **Kommunikationsendgeräteanordnung**

(30) Priorität: 30.09.1993 DE 4333432
(71) Anmelder: SIEMENS AKTIENGESELLSCHAFT, D-80333 München (DE)
(72) Erfinder: Ahlmer, Hubert, Dipl.-Ing., D-48712 Gescher (DE)

(57) **Zusammenfassung**

Kommunikationsendgeräteanordnung zum Anschluß an eine analoge Teilnehmeranschlußeinheit TAE, mindestens bestehend aus einer Fernsprechendeinrichtung FE mit Signalisierungs-/Übertragungseinheit S/Ü-E1 und einer Datenübertragungseinrichtung DÜE zum Anschließen einer Datenendeinrichtung DEE an die Teilnehmeranschlußeinheit TAE, wobei die Datenübertragungseinrichtung DÜE eine Steuereinheit MSE und eine Signalisierungs-/Übertragungseinheit S/Ü-E1 hat. Datenübertragungseinrichtung DÜE und Fernsprechendeinrichtung FE sind derart ausgestaltet, daß die Steuereinheit MSE der Datenübertragungseinrichtung DÜE in der Signalisierungs-/Übertragungseinheit S/Ü-E2 der Fernsprechendeinrichtung FE einen Teilnehmerschleifenschluß bewirken kann.

## Beschreibung

Die vorliegende Erfindung betrifft eine an eine analoge Teilnehmeranschlußeinheit anschließbare Kommunikationsendgeräteanordnung nach dem Oberbegriff des Patentanspruches 1.

Solche Kommunikationsendgeräteanordnungen sind prinzipiell bekannt und u.a. in dem Buch "Datenübertragung" von W. Bacher, D. Grunow und F. Schierenbeck, Siemens Aktiengesellschaft 1978 auf den Seiten 217 bis 345 beschrieben. Bei bekannten Kommunikationsendgeräteanordnungen ist als Datenübertragungseinrichtung üblicherweise ein Modem vorgesehen, das zwischen eine Teilnehmeranschlußeinheit und eine Fernsprechendeinrichtung geschaltet ist und den Teilnehmeranschluß wahlweise an die Fernsprechendeinrichtung oder über eine Modulator-Demodulator-Einheit an eine Datenendeinrichtung schaltet. Das obengenannte Buch "Datenübertragung" zeigt auf Seite 343 im Bild 6.5 eine komfortable Kommunikationsendgeräteanordnung, bestehend aus einem Datenfernsprecher als Fernsprechendeinrichtung und aus einem Modem sowie einem Fernsprechzusatz mit Anschalteinheit als Datenübertragungseinrichtung. Diese Kommunikationsendgeräteanordnung ermöglicht verschiedenartige, auf den Seiten 218 bis 223 beschriebene Leitungsanschaltungen. Insbesondere ist ein Umschalten vom Fernsprechbetrieb auf Datenübertragungsbetrieb über eine interne Ansteuerung des Fernsprechzusatzes oder über eine mit einer Datenendeinrichtung verbundene Schnittstellenleitung möglich. Ein Rückschalten vom Datenübertragungsbetrieb auf den Fernsprechbetrieb ist entweder über die besagte Schnittstellenleitung von der Datenendeinrichtung gesteuert oder mit Hilfe einer Erdtaste von der Fernsprechendeinrichtung gesteuert möglich.

Bei den Kommunikationsendgeräteanordnungen nach dem Stande der Technik ist es möglich, durch die Datenübertragungseinrichtung gesteuert einen Teilnehmeranschluß zwischen einem Fernsprechendgerät und - über eine Modulator-Demodulatoreinheit - einer Datenendeinrichtung umzuschalten. Damit über die Fernsprechendeinrichtung eine Sprachverbindung aufgebaut werden kann, muß hierbei ein Benutzer in der Fernsprechendeinrichtung zusätzlich den Teilnehmerschleifenschluß bewirken. Dies geschieht üblicherweise durch Abheben des Handapparates und dadurch bedingtes Betätigen eines Gabelumschalters oder durch Aktivieren einer Freisprechfunktion mit Hilfe einer Betätigungstaste.

Aufgabe der vorliegenden Erfindung ist es, eine Kommunikationsendgeräteanordnung der vorgenannten Art bereitzustellen, die von der Datenübertragungseinrichtung gesteuert einen komfortablen Aufbau einer Sprachsignalverbindung ermöglicht.

Diese Aufgabe wird gelöst durch eine Kommunikationsendgeräteanordnung mit den Merkmalen des Patentanspruches 1. Günstige Ausgestaltungen sind Gegenstand von Unteransprüchen. In einer erfindungsgemäßen Kommunikationsendgeräteanordnung sind die Fernsprechendeinrichtung und die Datenübertragungseinrichtung zum Anschließen einer Datenendeinrichtung aneinander angepaßt, so daß eine Steuereinheit der Datenübertragungseinrichtung in der Fernsprechendeinrichtung einen Teilnehmerschleifenschluß bewirken kann. Dadurch wird der Aufbau einer Sprachverbindung von einer Datenendeinrichtung gesteuert über die Datenübertragungseinrichtung möglich, ohne daß der Benutzer der Kommunikationsendgeräteanordnung zum Verbindungsaufbau die Fernsprechendeinrichtung zu betätigen braucht. Hierbei gibt es verschiedene Möglichkeiten für den Benutzer, einen Verbindungsaufbau bzw. das Zustandekommen einer Sprachverbindung zu überprüfen. Eine einfache Möglichkeit ist das Mithören der auf der Fernsprechleitung befindlichen Signale. Hierzu genügt ein Mithörlautsprecher in der Datenübertragungseinrichtung oder in der Fernsprech-endeinrichtung. Falls die verwendete Fernsprechendeinrichtung der Kommunikationsendgeräteanordnung über eine Freisprechfunktion verfügt, kann die Datenübertragungseinrichtung durch Aktivieren dieser Freisprechfunktion einen Teilnehmerschleifenschluß in der Fernsprechendeinrichtung bewirken, wobei automatisch eine akustische Überwachung des Verbindungsaufbaus sichergestellt wird. Hierbei muß die Fernsprechendeinrichtung derart ausgestaltet sein, daß ein Aktivieren der Freisprechfunktion auch von der Steuereinheit der Datenübertragungseinrichtung möglich ist. Eine günstige Ausgestaltung sieht hierzu ein spezielles, von der Datenübertragungseinrichtung abgebbares Signal vor, das die Steuerung der Fernsprechendeinrichtung in entsprechender Weise beeinflußt.

Gegebenenfalls kann eine Überwachung eines von einer Datenendeinrichtung mit Hilfe der Datenübertragungseinrichtung bewirkten Sprachverbindungsaufbaus mit Hilfe einer optischen Anzeige vorgenommen werden.

Zur Realisierung der Erfindung ist die Datenübertragungseinrichtung einer erfindungsgemäßen Kommunikationsendgeräteanordnung derart ausgestaltet, daß sie ein Signal zum Bewirken eines Teilnehmerschleifenschlusses in der Fernsprechendeinrichtung abgeben kann. Die Fernsprechendeinrichtung ist entsprechend ausgestaltet, daß das zuvor genannte Signal der Datenübertragungseinrichtung entweder auf eine Fernsprechsteuereinheit der Fernsprechendeinrichtung einwirkt und somit mittelbar einen Schleifenschluß bewirkt oder auf die Signalisierungs-/Übertragungseinheit der Fernsprechendeinrichtung einwirkt - ggf. auf eine Treiberschaltungsanordnung für einen elektrischen Schleifenschlußschalter - und somit unmittelbar einen Teilnehmerschleifenschluß in der Fernsprechendeinrichtung bewirken kann.

Das initiieren eines Wahlrufes zum Aufbau einer Sprachsignalverbindung durch die Datenübertragungseinrichtung in Abhängigkeit von einer an der Datenübertragungseinrichtung angeschlossenen Datenendeinrichtung kann unterschiedlich realisiert sein. Eine Möglichkeit hierzu sieht vor, daß eine Steuereinheit der Datenübertragungseinrichtung eine in der Datenübertragungseinrichtung enthaltene Signalisierungs/ Übertragungseinheit zum Wiedergeben eines Wahlrufes veranlaßt. Nach Abgabe des Wahlrufes würden hierbei ggf. die Signalisierungs-/Übertragungseinheit der Datenübertragungseinrichtung und eine in der Fernsprechendeinrichtung enthaltene Signalisierungs-/Übertragungseinheit kurzzeitig parallelgeschaltet werden, bis sichergestellt ist, daß die Teilnehmerschleife innerhalb der Fernsprechendeinrichtung geschlossen ist. Danach würde die Teilnehmerschleife innerhalb der Datenübertragungseinrichtung geöffnet. Eine andere Möglichkeit sieht vor, daß die Steuereinheit der Datenübertragungseinrichtung mit Hilfe der Signalisierungs-/Übertragungseinheit der Fernsprechendeinrichtung einen Wahlruf abgibt. Hierzu kann entweder die Steuereinheit der Datenübertragungseinrichtung die Signalisierungs-/Übertragungseinheit der Fernsprechendeinrichtung unmittelbar in geeigneter Weise steuern oder die Steuereinheit der Datenübertragungseinrichtung kann einen Wahlbefehl sowie die erforderlichen Wahldaten wie z.B. die zu wählende Rufnummer an eine Steuereinheit der Fernsprechendeinrichtung übermitteln. Wird ein Wahlruf mit Hilfe der Signalisierungs-/Übertragungseinheit der Fernsprechendeinrichtung abgegeben, so ist ein Teilnehmerschleifenschluß in der Signalisierungs-/Übertragungseinheit der Datenübertragungseinrichtung nicht erforderlich.

Die Erfindung ermöglicht den komfortablen Aufbau einer Sprachverbindung mit Hilfe einer Datenendeinrichtung. Durch einfaches Eingeben eines Wahlbefehles in eine Datenendeinrichtung wie z.B. einen PC oder einen Computer mit stiftgesteuerter Bedienoberfläche kann ein Benutzer eine Sprachverbindung herstellen, ohne zusätzlich die Fernsprechendeinrichtung bedienen zu müssen. Dies ist insbesondere im Falle eines erfolglosen Verbindungsaufbaues, der beispielsweise durch Leitungsüberlastung, durch Anschlußbelegung des gewünschten Teilnehmers oder durch Abwesenheit des gewünschten Teilnehmers bedingt sein kann, von Vorteil, falls die Datenendeinrichtung in diesem Falle selbstätig entweder eine Wahlwiderholung vornimmt oder ggf. einen Verbindungsaufbau unter einer anderen Rufnummer des gewünschten Teilnehmers initiiert. Denkbare andere Nummern eines gewünschten Teilnehmers wären hierbei die Rufnummern eines Geschäfts- bzw. Privatanschlusses die Rufnummer einer Sekräterin, die Rufnummer eines Telefaxgerätes oder die Rufnummer einer Datenendeinrichtung.

Bei Verwendung einer erfindungsgemäßen Kommunikationsendgeräteanordnung braucht der Fernsprechteilnehmer bei mit Hilfe einer Datenendeinrichtung eingeleitetem Verbindungsaufbau erst nach Zustandekommen einer Sprachverbindung zu reagieren und ist während des Verbindungsaufbaues entlastet.

Nachstehend wird die Erfindung anhand der Figuren näher erläutert.

Es zeigt:
Figur 1 in schematischer Darstellung das Blockschaltbild einer möglichen Ausgestaltungsform einer Kommunikationsendgeräteanordnung nach der Erfindung;
die Figuren 2, 3, 4, 5a, 5b und 5c Flußdiagramme möglicher, für einen Verbindungsaufbau vorgesehener Steuerverfahren für eine Steuereinheit einer Datenübertragungseinrichtung.

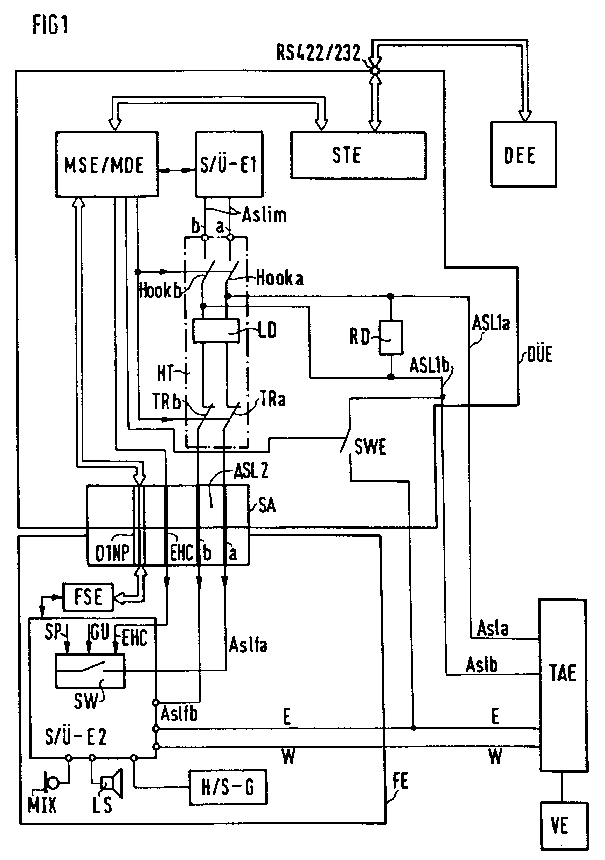

Die in Figur 1 verwendeten Bezugszeichen haben hierbei folgende Bedeutung:

### Bezugszeichenliste

- SA1: Schnittstellenanordnung
- FE: Fernsprechendeinrichtung
- DÜE: Datenübertragungseinrichtung
- E: Fernsprecherde-Leitung
- VE: Vermittlungseinrichtung
- ASL1a, ASL1b: Teilnehmeranschlußleitungen
- TAE: Teilnehmeranschlußeinheit
- Asla, Aslb: Teilnehmeranschlußleitungen
- D1NP: Datenkanal
- HT: Umschalteinrichtung
- Hooka, Hookb: Schalter der Umschalteinrichtung HT
- TRa, TRb: Schalter der Umschalteinrichtung HT
- Aslfa, Aslfb: Teilnehmeranschlußleitungen
- MSE: Modemsteuereinheit
- MDE: Modulator-Demodulator-Einheit
- S/Ü-E1: Signalisierungs-/Übertragungseinheit
- S/Ü-E2: Signalisierungs-/Übertragungseinheit
- EHC: Schnittstellenverbindung für ein Signal von MSE zum Bewirken eines Teilnehmerschleifenschlußes in Fe
- STE: Schnittstellentreibereinheit
- RS 422/232: Schnittstelle
- DEE: Datenendeinrichtung
- FSE: Steuereinheit der Fernsprechendeinrichtung
- w: Rufsignalzusatzleitung
- SW: Schalter für den Teilnehmerschleifenschluß in FE
- SP: Signal zum Bewirken eines Schleifenschlußes
- GU: Signal, Abhängig vom Gabelumschalter
- H/S-G: Hör/Sprechgarnitur
- MIK: Mikrofon
- LS: Lautsprecher
- LD: Schleifenschlußdetektor
- RD: Rufsignaldetektor

Figur 1 zeigt eine Datenübertragungseinrichtung DÜE, die gemeinsam mit einer Fernsprechendeinrichtung FE eine Kommunikationsendgeräteanordnung nach der Erfindung bildet. Die Datenübertragungseinrichtung DÜE enthält eine Modemsteuereinheit MSE und eine Modulator-Demodulator-Einheit MDE, die in Figur 1 als gemeinsamer Block dargestellt sind. Die Modemsteuereinheit MSE ist an eine Datenendeinrichtung DEE anschließbar. In Figur 1 ist hierzu eine Busverbindung von dem Modemsteuereinheit zu einer Schnittstellentreibereinheit STE dargestellt und eine Verbindung von der Schnittstellentreibereinheit STE über einen Schnittstellenanschluß RS 422/232 zu einer außerhalb der Datenübertragungseinrichtung vorgesehenen Datenendeinrichtung. Selbstverständlich können Datenübertragungseinrichtungen und Datenendeinrichtungen hierbei in einem gemeinsamen Gehäuse angeordnet sein.

Die Modemsteuereinheit steuert außerdem den Schaltzustand einer Umschalteinrichtung HT, die mit den Teilnehmeranschlußleitungen Asla und Aslb einer Teilnehmeranschlußeinheit TAE verbindbare Anschlußleitungen ASL1a und ASL1b sowohl über Schaltelemente Hookb und Hooka an interne Anschlußleitungen Aslima und Aslimb einer Signalisierungs-/Übertragungseinheit S/Ü-E1 der Datenübertragungseinrichtung als auch über Schaltelemente TRa und TRb an Anschlußleitungen ASL2a und ASL2b einer Schnittstellenanordnung SA schalten kann. Die Schnittstellenanordnung SA dient hierbei zum Verbinden der Datenübertragungseinrichtung DÜE und der Fernsprechendeinrichtung FE. Die Anschlüße ASL2a und ASL2b sind mit den Teilnehmeranschlußleitungen Aslfa und Aslfb der Fernsprechendeinrichtung und dadurch mit einer Signalisierungs-/Übertragungseinheit S/Ü-E2 der Fernsprechendeinrichtung verbunden.

Bei Verwendung einer Kommunikationsendgeräteanordnung nach Figur 1 in einer Fernsprechnebenstellenanlage kann ggf. ein Fernsprecherdeanschluß E der Teilnehmeranschlußeinheit TAE sowohl der Fernsprechendeinrichtung FE als auch der Datenübertragungseinrichtung DÜE zugeführt werden. In diesem Falle ist ein Schalter SWE innerhalb der Datenübertragungseinrichtung DÜE von der Modemsteuereinheit MSE derart steuerbar, daß eine Teilnehmeranschlußleitung ASL1b an den Fernsprecherdeanschluß E schaltbar ist.

Die Signalisierungs-/Übertragungseinheit S/Ü-E 1 der Datenübertragungseinrichtung DÜE ist zum Übertragen von Daten und Signalisierungsbefehlen mit der Modemsteuereinheit MSE und Modulator-Demodulareinheit MDE verbunden. Ein in der Datenübertragungseinrichtung DÜE enthaltener Schleifenschlußdetektor LD überwacht ob an den Anschlußleitungen ASL2a und ASL2b der Schnittstellenanordnung SA ein Teilnehmerschleifenschluß vorhanden ist. Der Zustand dieses Schleifenschlußdetektors LD ist von der Modemsteuereinheit MSE abfragbar. Ein Wahlrufdetektor RD erfaßt, ob über die Anschlußleitungen ASL1a und ASL1b ein Wahlruf empfangen wird. Der Zustand dieses Schleifenschlußdetektors LD uns des Wahlrufdetektors RE ist von der Modemsteuereinheit MSE abfragbar.

Die Signalisierung-/Übertragungseinrichtung S/Ü-E 2 der Fernsprechendeinrichtung FE enthält einen Schalter SW zum Bewirken eines Teilnehmerschleifenschlußes. Dieser Schalter SW ist durch eine Steuereinrichtung FSE in Abhängigkeit vom Zustand eines Gabelschalters über ein Signal GU und bei Aktivierung einer Freisprechfunktion über ein Signal SP zum Bewirken eines Schleifenschlußes steuerbar. Zusätzlich ist der Schalter SW von der Modemsteureinheit MSE über eine Schnittstellenverbindung EHC der Schnittstellenanordnung SA steuerbar, um einen Schleifenschluß zu bewirken. Der Zustand des Schalters SW kann hierbei unmittelbar, ggf. über eine nicht dargestellte Treiberschaltung von der Modemsteuereinheit MSE beeinflußt werden. Das Signal EHC kann jedoch auch von der Modemsteuereinheit MSE an die Steuereinheit FSE der Fernsprechendeinrichtung FE übertragen werden, woraufhin die Steuereinheit FSE, ggf. unter Zuhilfenahme des Signales SP einen Schleifenschluß in der Signalisierung-/Übertragungseinrichtung S/Ü-E 2 bewirkt. Im letzt genannten Falle kann ein Signal EHC zur Bewirkung eines Schleifenschlußes auch von der Modemsteuereinheit MSE über einen Datenkanal D1NP zur Steuereinheit FSE der Fernsprechendeinrichtung FE übermittelt werden. Eine zusätzliche Leitung zum Übertragen des Signales EHC wäre in diesem Fall nicht erforderlich.

Wenn, wie in Figur 1 dargestellt, die Fernsprechendeinrichtung FE neben der Hör/Sprechgarnitur H/S-G noch ein Mikrofon MIK und ein Lautsprecher LS enthält und hiermit eine Freisprechfunktion realisierbar ist, kann die Modemsteuereinheit MSW entweder über eine Schnittstellenleitung EHC oder über einen Datenkanal D1NP veranlassen, die Freissprechfunktion zu aktivieren, so daß ein unmittelbares einwirken der Modemsteuereinheit MSE auf die Signalisierung-/Übertragungseinrichtung S/Ü-E 2 nicht erforderlich ist. Bei aktivierter Freisprechfunktion wird unabhängig von einem durch die Hör/Sprechgarnitur H/S-G bedingten Schaltzustand des Fernsprechendgerätes, also unabhängig von dem Signal GU, ein Teilnehmerschleifenschluß in der Signalisierung-/Übertragungseinrichtung S/Ü-E 2 bewirkt und mit Hilfe des Mikrofons MIK und des Lautsprechers LS ein Fernsprechvorgang ausgeführt.

Die Art der Anschaltung der Datenübertragungseinrichtung DÜE und des Fernsprechendgerätes FE an die mit einer Vermittlungseinrichtung VE verbundene Teilnehmeranschlußeinheit TAE angeschlossen ist, ist für die vorliegende Erfindung nicht von Belang. Die Erfindung ist daher auch diesbezüglich nicht auf die in der Figur 1 gezeigte Ausführungsform beschränkt, daß die Anschlußleitungen Asla und Alsb unmittelbar der Datenübertragungseinrichtung zugeführt werden, daß die Fernsprecherde-Leitung E sowohl der Datenübertragungseinrichtung als auch dem Fernsprechendgerät zugeführt wird und daß die Rufsignalzusatzleitung w unmittelbar der Fernsprechendeinrichtung FE zugeführt wird.

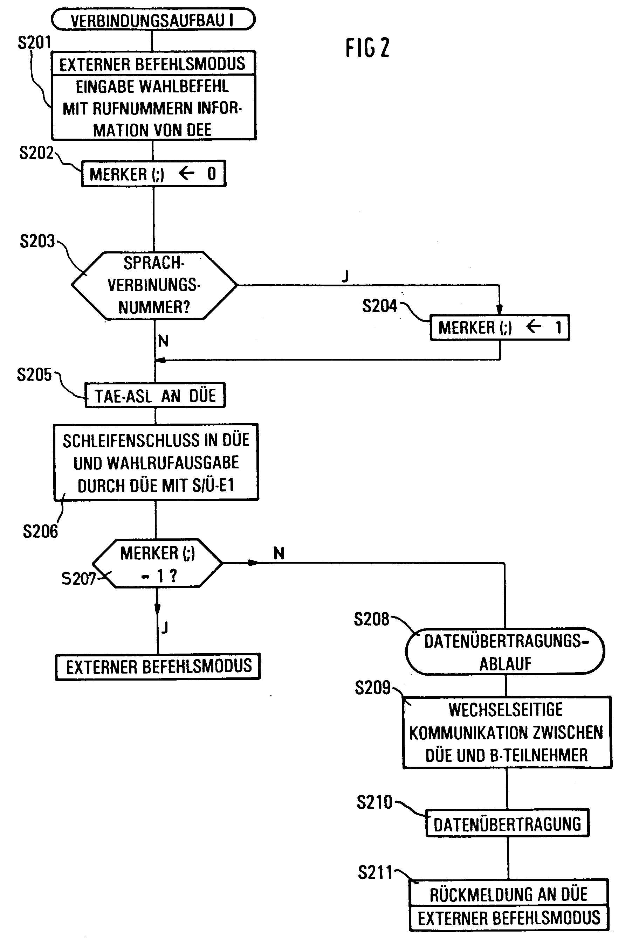

Figur 2 zeigt das Ablaufdiagramm einer in der Steuereinheit MSE der Datenübertragungseinrichtung DÜE abarbeitbaren Prozedur VERBINDUNGSAUFBAU I als Teil eines ersten Ausführungsbeispieles eines Verfahrens zum Steuern der Datenübertragungseinrichtung DÜE einer erfindungsgemäßen Kommunikationsendgeräteanordnung.

Bei den Ausführungsbeispielen der Steuerverfahren wird davon ausgegangen, daß eine von der Modemsteuereinheit MSE verschiedene Datenendeinrichtung DEE, die als eigenständiges Gerät ausgebildet sein kann, jedoch auch Teil der Fernsprechendeinrichtung FE oder der Datenübertragungseinrichtung DÜE sein kann, einen Sprachverbindungsaufbau initiiert. Hierbei gibt diese Datenendeinrichtung DEE einen Wahlbefehl mit Rufnummerninformation und darauffolgend eine Befehl zum Beenden der aufgebauten Verbindung, beispielsweise den Befehl ATH, an die Datenübertragungseinrichtung DÜE ab.

Die Steuerung MSE der Datenübertragungseinrichtung DÜE befindet sich beim Aufruf der Prozedur VERBINDUNGSAUFBAU I folglich in einem externen Befehlsmodus.

Durch Eingabe eines Wahlbefehles mit Rufnummerninformation von der Datenendeinrichtung DEE wird die Prozedur in Schritt S201 gestartet und in Schritt S202 wird ein Merker(;) auf 0 gesetzt. Dann wird in Schritt S203 überprüft, ob die aufzubauende Verbindung eine Sprachverbindung ist.

Eine Sprachverbindung kann hierbei entweder durch einen speziellen Befehl für einen Sprachverbindungsaufbau oder durch eine spezielle Kennzeichnung einer Sprachverbindungsrufnummer erfolgen. Ein heute übliches Verfahren sieht vor, bei Sprachverbindungsaufbau in der Rufnummerninformation ein ; vorzusehen.

Wird in Schritt S203 erkannt, daß eine Sprachverbindung aufzubauen ist, wird in Schritt S204 der Merker(;) auf 1 gesetzt und die Steuerung geht zu Schritt S205. Wenn nicht, geht die Steuerung unmittelbar zu Schritt S205, in dem die mit einer Vermittlungseinrichtung VE verbindbaren Teilnehmeranschlußleitungen Asla, Aslb, bzw. ASL1a, ASL1b an die Signalisierungs-/Übertragungseinheit S/Ü-E1 der Datenübertragungseinrichtung DÜE geschaltet werden. - Diese Teilnehmeranschlußleitungen sind nämlich üblicherweise im Grundzustand an die Signalisierungs-/Übertragungseinheit S/Ü-E2 des Fernsprechendeinrichtung FE geschaltet - .Dann wird in Schritt S206 in der Signalisierungs-/Übertragungseinheit S/Ü-E1 der Datenübertragungseinrichtung DÜE ein Schleifenschluß bewirkt und die Datenübertragungseinrichtung DÜE gibt mit Hilfe ihrer Signalisierungs-/Übertragungseinheit S/Ü-E1 einen Wahlruf aus. Daraufhin wird in Schritt S207 überprüft, ob eine Sprachverbindungsrufnummer ausgegeben worden ist bzw., ob der Merker(;) den Wert 1 hat. Wenn ja, geht die Steuerung der Datenübertragungseinrichtung DÜE in den externen Befehlsmodus und die Prozedur ist beendet. Wenn nicht, wird in Schritt S208 eine Prozedur DATENÜBERTRAGUNGSABLAUF mit den Schritten S209 bis S211 aufgerufen. Im Schritt S209 wird die übliche wechselseitige Kommunikation zwischen der Datenübertragungseinheit DÜE und dem Non-Voice-B-Teilnehmer durchgeführt. Dann wird in Schritt S210 die vorgesehene Datenübertragung durchgeführt. Nach Abschluß dieser Datenübertragung erfolgt in Schritt S211 eine entsprechende Rückmeldung an die initiierende Datenendeinrichtung DEE, die Steuerung geht in den externen Befehlsmodus über und die Prozedur ist beendet.

Die Schritte S405 bis S411 dienen dem Aufbau einer Datenverbindung (Non-Voice-Verbindung) und ermöglichen in dem beschriebenen Ausführungsbeispiel die Verwendung eines einzigen Verfahrensablaufes für den Aufbau von Sprachverbindungen und Non-Voice-Verbindungen.

Nach dem Beenden eines Verbindungsaufbaus erhält die Steuerung der Datenübertragungseinrichtung DÜE von der Datenendeinrichtung DEE einen Befehl (z.B. ATH) zum Abbrechen der Verbindung zwischen der Signalisierungs-/Übertragungseinheit S/Ü-E1 der Datenübertragungseinrichtung DÜE und den Teilnehmeranschlußleitungen ASL1a und ASL1b bzw. Asla und Aslb. Dieser ATH-Befehl bewirkt das Abarbeiten einer Prozedur ATH-ABLAUF I in der Modemsteuereinheit MSE der Datenübertragungseinrichtung DÜE. Die Figur 2 zeigt das Ablaufdiagramm einer möglichen Ausgestaltung einer solchen Prozedur des ersten Ausführungsbeispieles eines Steuerverfahrens.

Im externen Befehlsmodus erhält die Steuerung der Datenübertragungseinrichtung DÜE in Schritt S312 von der Datenendeinrichtung DEE einen Befehl ATH. Daraufhin wird in Schritt S313 der Zustand des Merkers(;) überprüft, d.h., es wird festgestellt, ob eine Sprachverbindung aufgebaut worden ist oder nicht. Ist der Merker(;) nicht 1, bezieht sich der ATH-Befehl also nicht auf eine Sprachverbindung, dann geht die Steuerung zu Schritt S314, in dem ein Öffnen der Teilnehmerschleife in der Signalisierungs-/Übertragungseinheit S/Ü-E1 der Datenübertragungseinrichtung DÜE ausgeführt wird. Daraufhin wird in Schritt S315 Die Teilnehmeranschlußeinheit TAE (bzw. deren Anschlußleitungen Asla und Aslb) an die Signalisierungs-/Übertragungseinheit S/Ü-E2 der Fernsprechendeinrichtung FE geschaltet und die Steuerung kehrt in den externen Befehlsmodus zurück.

Ist bei der Überprüfung in Schritt S313 der Zustand des Merkers(;) 1, bezieht sich der ATH-Befehl also auf eine Sprachverbindung, dann geht die Steuerung zu Schritt S316, in dem die bereits an die Signalisierungs-/Übertragungseinheit S/Ü-E1 der Datenübertragungseinrichtung DÜE angeschalteten Teilnehmeranschlußleitungen Asla und Aslb der Teilnehmeranschlußeinheit TAE zusätzlich (parallel) an die Signalisierungs-/Übertragungseinheit S/Ü-E2 der Fernsprechendeinrichtung FE geschaltet werden. Daraufhin wird in Schritt S317 überprüft, ob die Teilnehmerschleife in der Fernsprechendeinrichtung FE geschlossen ist.

Ist bei der Überprüfung in Schritt S317 die Teilnehmerschleife in der Fernsprechendeinrichtung FE geschlossen, geht die Steuerung zu Schritt S318, um die Teilnehmerschleife in der Signalisierungs-/Übertragungseinheit S/Ü-E der Datenübertragungseinrichtung DÜE zu öffnen. Dann wird in Schritt S319 die Signalisierungs-/Übertragungseinheit S/Ü-E1 der Datenübertragungseinrichtung DÜE von den Teilnehmeranschlußleitungen Asla und Aslb der Teilnehmeranschlußeinheit TAE getrennt bzw. die Grundstellung eingestellt und die Steuerung kehrt in den externen Befehlsmodus zurück.

Ist bei der Überprüfung in Schritt S317 die Teilnehmerschleife in der Fernsprechendeinrichtung FE nicht geschlossen, geht die Steuerung zu Schritt S320, in dem ein Steuersignal EHC an die Fernsprechendeinrichtung FE abgegeben wird, um in der Signalisierungs-/Übertragungseinheit S/Ü-E2 der Fernsprechendeinrichtung FE einen Teilnehmerschleifenschluß zu bewirken. Außerdem wird in Schritt S323 ein Zeitgeber, der nach Ablauf von beispielsweise 2 Minuten ein Signal abgibt, rückgesetzt.

Daraufhin wird in Schritt S324 überprüft, ob die Teilnehmerschleife in der Fernsprechendeinrichtung FE geschlossen ist. Wenn nicht, wird in Schritt S325 überprüft, ob der 2-Minuten-Zeitgeber abgelaufen ist. Ist der 2-Minuten-Zeitgeber abgelaufen, geht die Steuerung von Schritt S325 zurück zu Schritt S324, um erneut zu überprüfen, ob die Teilnehmerschleife in der Fernsprechendeinrichtung FE geschlossen ist. Dadurch wird erreicht, daß auch bei Verwendung einer Fernsprechendeinrichtung, bei der nicht vorgesehen ist, einen Teilnehmerschleifenschluß durch die Datenübertragungseinrichtung DÜE zu veranlassen, dem Benutzer eine ausreichende Zeitspanne zum manuellen bewirken des Teilnehmerschleifenschlusses in der Fernsprechendeinrichtung zu lassen. Für die vorliegende Erfindung kann diese Ausgestaltung des Verfahrensablaufs entfallen. Es könnte dann anstatt des beschriebenen Schrittes S323 eine Zeitverzögerung von beispielsweise 2,5 Sekunden vorgesehen sein und der Schritt S325 könnte entfallen.

Ist bei der Überprüfung in Schritt S324 die Teilnehmerschleife in der Fernsprechendeinrichtung FE geschlossen oder ist bei der Überprüfung in Schritt S325 der 2-Minuten-Zeitgeber abgelaufen, geht die Steuerung zu Schritt S321, in dem das in Schritt S320 eingeschaltete EHC-Signal ausgeschaltet wird. Von Schritt S321 geht die Steuerung zu Schritt S318 und von dort über Schritt S319 in den externen Befehlsmodus, wie oben beschrieben.

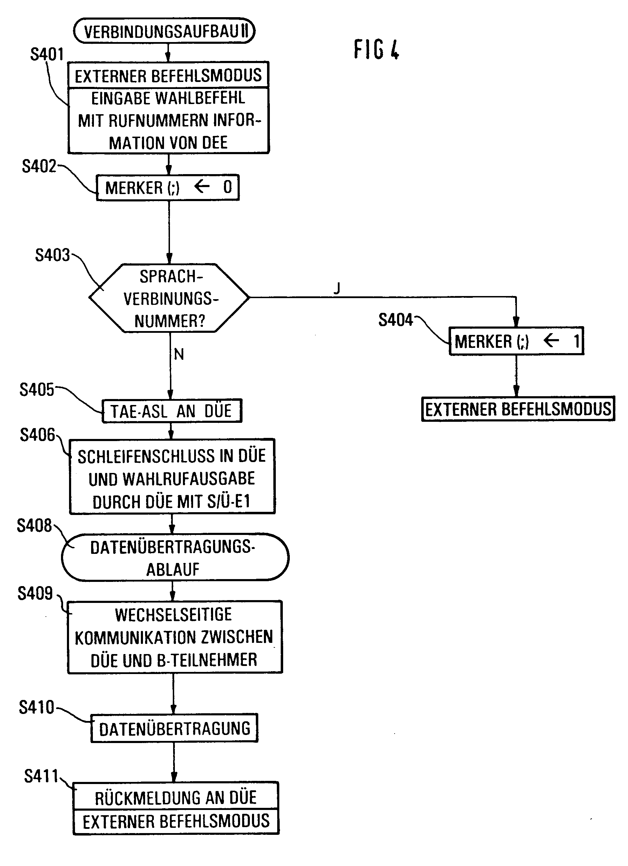

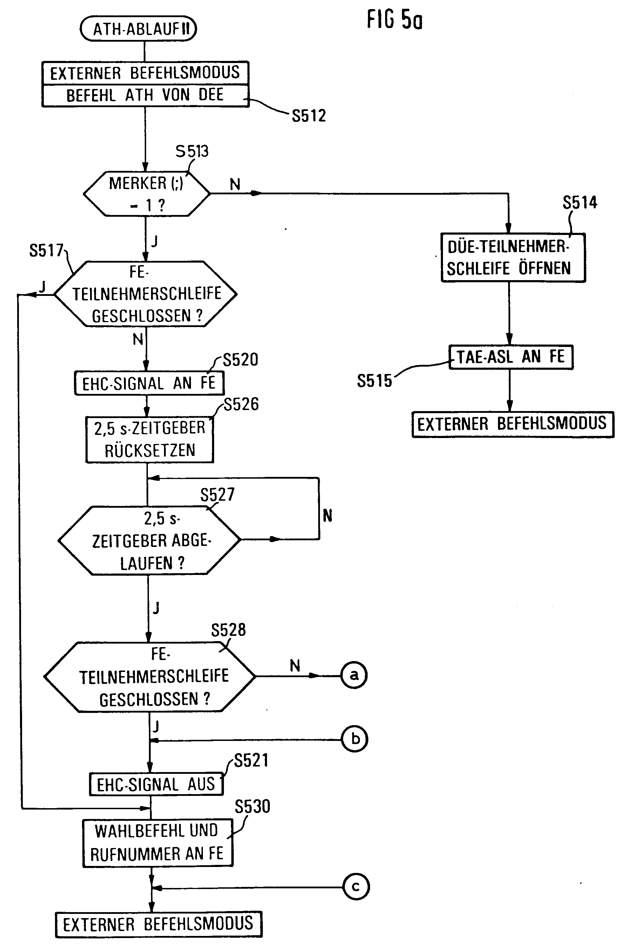

Nachstehend wird eine zweite mögliche Ausgestaltungsform eines Steuerverfahrens für eine erfindungsgemäße Kommunikationsendgeräteanordnung anhand der Prozeduren VERBINDUNGSAUFBAU II und ATH-ABLAUF II unter Bezugnahme auf die Figuren 4 und 5a bis 5c beschrieben.

Die Steuerung MSE der Datenübertragungseinrichtung DÜE befindet sich beim Aufruf der Prozedur VERBINDUNGSAUFBAU II folglich in einem externen Befehlsmodus.

Durch Eingabe eines Wahlbefehles mit Rufnummerninformation von der Datenendeinrichtung DEE wird die Prozedur in Schritt S401 gestartet und in Schritt S402 wird ein Merker(;) auf 0 gesetzt. Dann wird in Schritt S403 überprüft, ob die aufzubauende Verbindung eine Sprachverbindung ist.

Eine Sprachverbindung kann hierbei entweder durch einen speziellen Befehl für einen Sprachverbindungsaufbau oder durch eine spezielle Kennzeichnung einer Sprachverbindungsrufnummer erfolgen. Ein heute übliches Verfahren sieht vor, bei Sprachverbindungsaufbau in der Rufnummerninformation ein ; vorzusehen.

Wird in Schritt S403 erkannt, daß eine Sprachverbindung aufzubauen ist, wird in Schritt S404 der Merker(;) auf 1 gesetzt und die Steuerung kehrt in den externen Befehlsmodus zurück.

Wenn nicht, geht die Steuerung unmittelbar zu Schritt S405, in dem die mit einer Vermittlungseinrichtung VE verbindbaren Teilnehmeranschlußleitungen Asla, Aslb, bzw. ASL1a, ASL1b an die Signalisierungs-/Übertragungseinheit S/Ü-E1 der Datenübertragungseinrichtung DÜE geschaltet werden. - Diese Teilnehmeranschlußleitungen sind nämlich üblicherweise im Grundzustand an die Signalisierungs-/Übertragungseinheit S/Ü-E2 des Fernsprechendeinrichtung FE geschaltet - . Dann wird in Schritt S406 in der Signalisierungs-/Übertragungseinheit S/Ü-E1 der Datenübertragungseinrichtung DÜE ein Schleifenschluß bewirkt und die Datenübertragungseinrichtung DÜE gibt mit Hilfe ihrer Signalisierungs-/Übertragungseinheit S/Ü-E1 einen Wahlruf aus. Daraufhin wird in Schritt S408 eine Prozedur DATENUBERTRAGUNGSABLAUF mit den Schritten S409 bis S411 aufgerufen. Im Schritt S409 wird die übliche wechselseitige Kommunikation zwischen der Datenübertragungseinheit DÜE und dem Non-Voice-B-Teilnehmer durchgeführt. Dann wird in Schritt S410 die vorgesehene Datenübertragung durchgeführt. Nach Abschluß dieser Datenübertragung erfolgt in Schritt S411 eine entsprechende Rückmeldung an die den Verbindungsaufbau veranlassende Datenendeinrichtung DEE, die Steuerung geht in den externen Befehlsmodus über und die Prozedur ist beendet.

Die Schritte S405 bis S411 dienen dem Aufbau einer Datenverbindung (Non-Voice-Verbindung) und ermöglichen in dem beschriebenen Ausführungsbeispiel die Verwendung eines einzigen Verfahrensablaufes für den Aufbau von Sprachverbindungen und Non-Voice-Verbindungen.

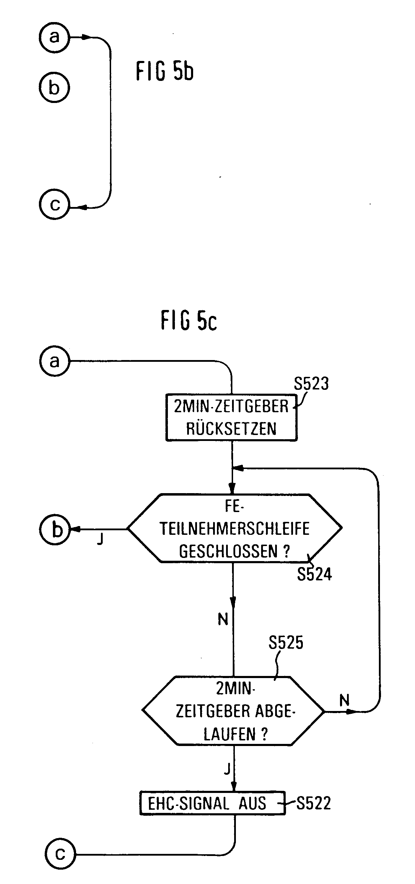

Nach dem Beenden eines Verbindungsaufbaus erhält die Steuerung der Datenübertragungseinrichtung DÜE von der Datenendeinrichtung DEE einen Befehl (z.B. ATH) zum Abbrechen der Verbindung zwischen der Signalisierungs-/Übertragungseinheit S/Ü-E1 der Datenübertragungseinrichtung DÜE und den Teilnehmeranschlußleitungen ASL1a und ASL1b bzw. Asla und Aslb. Dieser ATH-Befehl bewirkt das Abarbeiten einer Prozedur ATH-ABLAUF II in der Modemsteuereinheit MSE der Datenübertragungseinrichtung DÜE. Die Figur 5a in Verbindung mit den Figuren 5b oder 5c zeigt das Ablaufdiagramm einer möglichen Ausgestaltung einer solchen Prozedur.

Im externen Befehlsmodus erhält die Steuerung der Datenübertragungseinrichtung DÜE in Schritt S512 von der Datenendeinrichtung DEE einen Befehl ATH. Daraufhin wird in Schritt S513 der Zustand des Merkers(;) überprüft, d.h., es wird festgestellt, ob eine Sprachverbindung aufgebaut werden sollte oder nicht. Ist der Merker(;) nicht 1, bezieht sich der ATH-Befehl also nicht auf eine Sprachverbindung, dann geht die Steuerung zu Schritt S514, in dem ein Öffnen der Teilnehmerschleife in der Signalisierungs-/Übertragungseinheit S/Ü-E1 der Datenübertragungseinrichtung DÜE ausgeführt wird. Dann wird in Schritt S515 Die Teilnehmeranschlußeinheit TAE (bzw. deren Anschlußleitungen Asla und Aslb) an die Signalisierungs-/Übertragungseinheit S/Ü-E2 der Fernsprechendeinrichtung FE geschaltet (oder ein anderer Grundzustand der Anschlußleitungsbeschaltung eingestellt) und die Steuerung kehrt in den externen Befehlsmodus zurück.

Ist bei der Überprüfung in Schritt S513 der Zustand des Merkers(;) 1, bezieht sich der ATH-Befehl also auf eine Sprachverbindung, dann geht die Steuerung zu Schritt S517, in dem überprüft wird, ob die Teilnehmerschleife in der Fernsprechendeinrichtung FE geschlossen ist.

Ist bei der Überprüfung in Schritt S517 die Teilnehmerschleife in der Fernsprechendeinrichtung FE geschlossen, geht die Steuerung unmittelbar zu Schritt S530, der später beschrieben wird.

Ist bei der Überprüfung in Schritt S517 die Teilnehmerschleife in der Fernsprechendeinrichtung FE nicht geschlossen, geht die Steuerung zu Schritt S520, in dem ein Steuersignal EHC an die Fernsprechendeinrichtung FE abgegeben wird, um in der Signalisierungs-/Übertragungseinheit S/Ü-E2 der Fernsprechendeinrichtung FE einen Teilnehmerschleifenschluß zu bewirken. Außerdem wird in Schritt S526 ein Zeitgeber, der nach Ablauf von beispielsweise 2,5 Sekunden ein Signal abgibt, rückgesetzt. Daraufhin wird in Schritt S527 überprüft, ob der 2,5-Sekunden-Zeitgeber abgelaufen ist. Ist der 2,5-Sekunden-Zeitgeber abgelaufen, geht die Steuerung von Schritt S527 zurück zu Schritt S528, um erneut zu überprüfen, ob die Teilnehmerschleife in der Fernsprechendeinrichtung FE geschlossen ist. Dadurch wird erreicht, daß die zum Bewirken des Schleifenschlusses erforderlichen Vorgänge bei üblichem Betriebsablauf abgeschlossen sind, bevor die erneute Abfrage des Schrittes S528 erfolgt.

Ist bei der Überprüfung in Schritt S528 die Teilnehmerschleife in der Fernsprechendeinrichtung FE geschlossen, geht die Steuerung zu Schritt S521, in dem das in Schritt S520 eingeschaltete EHC-Signal ausgeschaltet wird. Von Schritt S521 geht die Steuerung zu Schritt S530, in dem die Datenübertragungseinrichtung DÜE an die Fernsprechendeinrichtung FE einen Wahlbefehl und eine Rufnummerninformation abgibt, um eine Wahlrufabgabe durch die Signalisierungs-/Übertragungseinheit S/Ü-E2 der Fernsprechendeinrichtung FE zu bewirken.

Die Figuren 5b und 5c zeigen jeweils eine Variante des Verfahrensablaufes, falls bei der Überprüfung in Schritt S528 festgestellt wird, daß kein Teilnehmerschleifenschlusß vorliegt.

Ein Ablauf nach Figur 5a in Verbindung mit Figur 5b sieht in diesem Falle vor, daß die Steuerung unmittelbar in den externen Betriebsmodus übergeht und kein Wahlruf abgegeben wird.

Demgegenüber sieht ein Ablauf nach Figur 5a in Verbindung mit Figur 5c in diesem Falle vor, daß die Steuerung von Schritt S528 zu Schritt S523 geht, in dem ein Zeitgeber, der nach Ablauf von beispielsweise 2 Minuten ein Signal abgibt, rückgesetzt wird.

Daraufhin wird in Schritt S524 überprüft, ob die Teilnehmerschleife in der Fernsprechendeinrichtung FE geschlossen ist. Wenn nicht, wird in Schritt S525 überprüft, ob der 2-Minuten-Zeitgeber abgelaufen ist. Ist der 2-Minuten-Zeitgeber noch nicht abgelaufen, geht die Steuerung von Schritt S525 zurück zu Schritt S524, um erneut zu überprüfen, ob die Teilnehmerschleife in der Fernsprechendeinrichtung FE geschlossen ist. Ist die Teilnehmerschleife bei der Überprüfung in Schritt S524 geschlossen , dann geht die Steuerung von Schritt S524 zu Schritt S521 in Figur 5a. Dadurch wird erreicht, daß auch bei Verwendung einer Fernsprechendeinrichtung, bei der nicht vorgesehen ist, einen Teilnehmerschleifenschluß durch die Datenübertragungseinrichtung DÜE zu veranlassen, dem Benutzer eine ausreichende Zeitspanne zum manuellen Bewirken des Teilnehmerschleifenschlusses in der Fernsprechendeinrichtung FE zur Verfügung zu stellen.

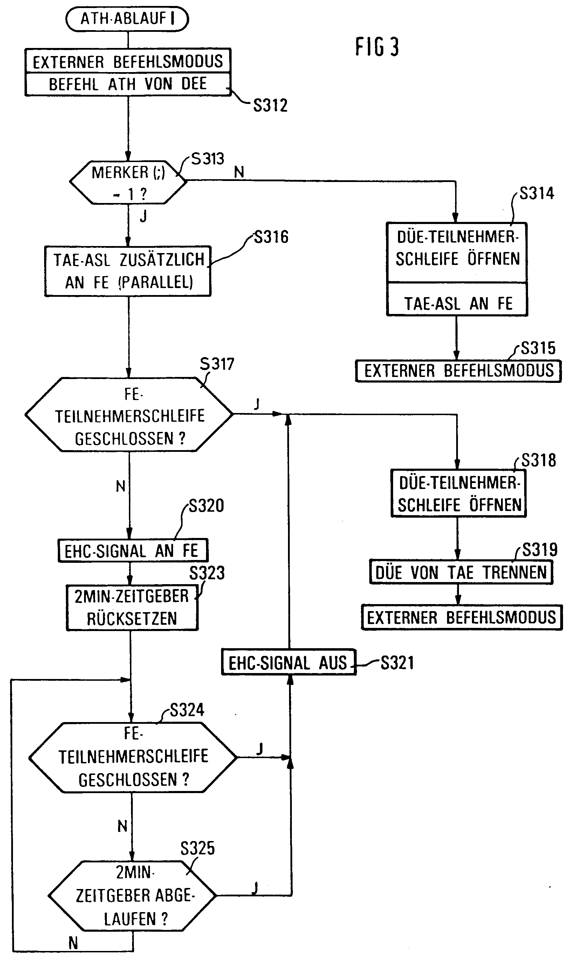

Die unter Bezugnahme auf die Figuren 2 und 3 sowie 4 und 5a bis 5c beschriebene Ausführungsbeispiele für Verfahrensabläufe sind jeweils auf eine komfortable Anwendung zugeschnitten und enthalten daher auch Verfahrensschritte, die nicht oder nicht unbedingt in der vorliegenden Form erforderlich sind.

## Patentansprüche

1. Kommunikationsendgeräteanordnung zum Anschluß an eine analoge Teilnehmeranschlußeinheit (TAE), mindestens bestehend aus einer Fernsprechendeinrichtung (FE) und einer Datenübertragungseinrichtung (DÜE) zum Anschließen einer Datenendeinrichtung (DEE) an die Teilnehmeranschlußeinheit (TAE), wobei die Datenübertragungseinrichtung (DÜE) eine Steuereinheit (MSE) und eine Signalisierungs-/Übertragungseinheit (S/Ü-E1)zum Vornehmen eines Teilnehmerschleifenschlusses, zum Ausgeben von Wahlrufsignalen und zur Datensignalübertragung hat und wobei die Fernsprechendeinrichtung (FE) eine Signalisierungs-/Übertragungseinheit (S/Ü-E2) zum Ausgeben von Wahlrufsignalen und zur Informationsübertragung hat, **gekennzeichnet** durch eine derartige Ausgestaltung der Datenübertragungseinrichtung (DÜE) und der Fernsprechendeinrichtung (FE), daß die Steuereinheit (MSE) der Datenübertragungseinrichtung (DÜE) in der Signalisierungs-/Übertragungseinheit (S/Ü-E2) der Fernsprechendeinrichtung (FE) einen Teilnehmerschleifenschluß bewirken kann.

2. Kommunikationsendgeräteanordnung nach Anspruch 1, dadurch **gekennzeichnet**, daß die Datenübertragungseinrichtung (DÜE) eine Modulator-Demodulator-Einheit (MDE) hat.

3. Kommunikationsendgeräteanordnung nach einem der vorhergehenden Ansprüche, dadurch **gekennzeichnet**, daß die Fernsprechendeinrichtung (FE) eine aktivierbare Freisprechfunktion hat, die ein Telefonieren bei aufgelegtem, eine Hör/Sprech-Garnitur (HSE) enthaltendem Handapparat (HA) ermöglicht und daß die Freisprechfunktion auch von der Steuereinheit (MSE) der Datenübertragungseinrichtung (DÜE) aktivierbar ist.

4. Kommunikationsendgeräteanordnung nach einem der vorhergehenden Ansprüche, dadurch **gekennzeichnet**, daß die Steuereinheit (MSE) der Datenübertragungseinrichtung DÜE) abhängig von einer an die Datenübertragungseinrichtung (DÜE) angeschlossenen Datenendeinrichtung (DEE) einen Wahlruf zum Aufbau einer Sprachsignalverbindung initiieren kann.

5. Kommunikationsendgeräteanordnung nach Anspruch 4, **gekennzeichnet** durch eine derartige Ausgestaltung der Steuereinheit (MSE), daß die Steuereinheit (MSE) den Wahlruf zum Aufbau einer Sprachsignalverbindung mit Hilfe der Signalisierungs-/Übertragungseinheit (S/Ü-E1) der Datenübertragungseinheit (DÜE) ausgibt und danach in der Fernsprechendeinrichtung (FE) einen Teilnehmerschleifenschluß bewirkt.

6. Kommunikationsendgeräteanordnung nach Anspruch 4, **gekennzeichnet** durch eine derartige Ausgestaltung der Steuereinheit (MSE), daß die Steuereinheit (MSE) den Wahlruf zum Aufbau einer Sprachsignalverbindung mit Hilfe der Signalisierungs-/Übertragungseinheit (S/Ü-E2) des Fernsprechendgerätes (FE) veranlaßt, nachdem sie im Fernsprechendgerät (FE) einen Teilnehmerschleifenschluß bewirkt hat.
